# FASCICULE DE BREVET EUROPEEN

(11) **EP 2 591 220 B1**
(45) Date de publication et mention de la délivrance du brevet: **31.08.2016**
(21) Numéro de dépôt: 11745561.8
(22) Date de dépôt: 05.07.2011
(51) Int. Cl.: F02C 7/08

(54) **ARCHITECTURE DE TURBOMACHINE A ECHANGEUR DE CHALEUR INTEGRE A L'ECHAPPEMENT**
TURBOMOTORARCHITEKTUR MIT EINEM IN DEM AUSLASS INTEGRIERTEN WÄRMETAUSCHER
GAS TURBINE ARCHITECTURE WITH HEAT EXCHANGER BUILT INTO THE EXHAUST

(30) Priorité: 06.07.2010 FR 1055452
(43) Date de publication de la demande: 15.05.2013
(73) Titulaire: Turbomeca, 64510 Bordes (FR)
(72) Inventeur: THOMAS, Rainer, F-64320 Idron (FR)
(74) Mandataire: Gevers & Orès
(86) Numéro de dépôt international: PCT/FR2011/051584
(87) Numéro de publication internationale: WO 2012/004515

(56) Documents cités:
- EP-A1- 1 930 543
- EP-A2- 1 589 204
- WO-A1-2012/004516
- DE-U1-202008 008 567
- FR-A- 1 518 230
- GB-A- 629 832
- UA-U- 24 041
- US-A- 3 302 397
- US-A- 4 147 024
- US-A1- 2009 277 154

## Description

### DOMAINE TECHNIQUE

L'invention concerne une architecture d'échange de chaleur configurée pour permettre une intégration optimisée dans un ensemble d'échappement d'une turbomachine.

Une turbomachine est ici définie comme étant une machine aéronautique à gaz apte à fournir de la puissance sur arbre. On distingue en général dans cette catégorie les turbomoteurs (moteurs d'hélicoptère, unités de puissance auxiliaires ou APU) et les turbopropulseurs (avions, drones).

Classiquement, une architecture de base de turbomachine d'aéronef comporte comme composants essentiels agencés de révolution successivement d'amont en aval sur une même ligne principale : une entrée d'air, au moins un compresseur d'air, une chambre de combustion des gaz, au moins une turbine haute pression d'entraînement du compresseur par un arbre haute pression, au moins une turbine libre de transformation de l'énergie issue de la combustion en énergie mécanique disponible - en prise sur un arbre de puissance pour entraîner les charges - et un ensemble d'échappement des gaz résiduels.

La morphologie des éléments de structure constituant l'ensemble d'échappement dépend de l'architecture de la turbomachine, elle-même fonction de la localisation de la prise de puissance. On distingue les architectures de turbomachine équipées d'un:
- arbre de puissance traversant et prise de mouvement avant,
- arbre de puissance arrière et prise de mouvement avant via un arbre extérieur,
- arbre de puissance arrière avec prise de mouvement arrière.

Il est avantageux d'intégrer, dans les éléments de structure d'échappement des gaz chauds, des moyens échangeurs de chaleur pour récupérer l'énergie résiduelle et la réinjecter dans la turbomachine, afin d'augmenter la puissance disponible sur arbre et donc le rendement de la machine.

### ETAT DE LA TECHNIQUE

Des échangeurs existent pour des turbines à gaz terrestres qui ont une architecture de même type que les turbomachines aéronautiques, mais qui n'ont pas de contraintes de masse. De plus, pour ces turbines, la durée de vie des pièces prime en général sur le rendement des composants.

Ces échangeurs de turbines terrestres sont généralement de type obstructif et sont positionnés à l'échappement pour être traversés par la totalité des gaz d'échappement. De tels échangeurs permettent de maximaliser la récupération d'énergie à la sortie du flux des gaz chauds. Mais cette récupération est pénalisée par une augmentation de masse importante avec une perte de charge importante à l'éjection. Ces échangeurs ne sont donc pas applicables aux turbomachines aéronautiques.

Une turbine à gaz selon l'art antérieur est divulguée dans le document US 4147024.

### EXPOSE DE L'INVENTION

L'invention vise à réaliser une architecture d'échange de chaleur à l'échappement d'une turbomachine qui permette d'optimiser un compromis global entre performances, masse, coût de production et coûts d'exploitation (consommation, maintenance) d'une telle architecture.

Pour ce faire, l'invention propose une architecture d'échange de chaleur partiellement obstructive du flux chaud des gaz d'échappement, sans forte perturbation, pour récupération partielle optimisée de l'énergie thermique des gaz d'échappement. Cette approche permet d'ajuster les paramètres de l'architecture d'échange (localisation, porosité, alimentation, pression, caractéristiques aérodynamiques, etc.) en fonction de l'architecture de la turbomachine concernée afin d'optimiser le compromis global.

Plus précisément, la présente invention a pour objet une architecture de turbomachine selon la revendication 1 à échangeur de chaleur intégré dans une veine d'échappement de flux des gaz chauds de la turbomachine, dans laquelle des éléments échangeurs de chaleur implantés dans l'un des éléments constituant la veine d'échappement sont de structure apte à canaliser le flux des gaz chauds. Une obstruction partielle du flux des gaz, dans un environnement globalement diffusif de ces gaz est réalisée lors d'une traversée d'une partie du flux dans ces éléments échangeurs, afin de récupérer de l'énergie thermique résiduelle des gaz d'échappement pour augmenter la puissance disponible sur arbre de la turbomachine, sans sensiblement perturber le flux des gaz.

Selon des modes de mise en oeuvre particuliers :
- Les éléments échangeurs sont de structure évolutive de manière continue en section, de sorte à faire évoluer sans perturbation le flux de gaz ;
- les éléments présentent en section une structure localisée limitée par rapport à la veine d'échappement et la partie de flux traversant ces éléments échangeurs est minoritaire, si bien que les éléments échangeurs présentent une obstruction minoritaire du flux des gaz d'échappement ;
- les éléments échangeurs présentent en section une structure sensiblement intégrale par rapport à la veine d'échappement avec une porosité ou perméabilité suffisamment élevée pour que l'obstruction du flux des gaz d'échappement reste partielle, « intégrale » signifiant que la section d'échange s'étend sur toute la section de la veine d'échappement ;
- les éléments d'échappement dans lesquels sont implantés les éléments échangeurs sont choisis, dans l'ordre d'amont en aval, parmi un diffuseur à cône central tenu par des bras structuraux, une tuyère d'échappement, un prolongateur/déviateur et un éjecteur final ;
- la structure des éléments échangeurs est choisie parmi une structure intercalaire annulaire, une structure de redresseur / déflecteur de canalisation du flux à plaques radiales, une structure de séparateur de flux, en particulier radiale, avec avantageusement une porosité variable en entrée du flux de gaz chaud, en particulier pour homogénéiser le flux ; une forme intercalaire ou séparatrice participe aux caractéristiques de diffusion en permettant soit d'augmenter la diffusion du flux à iso-stabilité et iso-longueur d'échappement, soit de raccourcir l'échappement à iso-diffusion ;
- chaque élément échangeur intègre un ou plusieurs canaux de fluide froid indépendants, de pressions pouvant être différentes en cas de circuits multiples ;
- soit les éléments échangeurs sont positionnés dans la veine d'échappement en épousant sa forme soit les éléments échangeurs restent en retrait, c'est-à-dire à l'intérieur de la veine, en fonction de la structure de ces éléments et de l'élément d'échappement dans lequel ils sont implantés ;
- afin de préserver les capacités d'aspiration d'air de l'éjecteur par effet Venturi au niveau d'un raccordement avec la tuyère ou le prolongateur/déviateur, le positionnement en retrait est avantageusement choisi avec une implantation juste en amont de l'éjecteur final, l'implantation en retrait permettant de ménager une nappe de flux non perturbé autour de l'échangeur, et/ou dans l'éjecteur final ;
- les éléments échangeurs sont de structure et d'implantation aptes à constituer des surfaces d'isolation et un matériau absorbant au niveau acoustique, de sorte à diminuer sensiblement la trainée et le bruit aérodynamique.

### BREVE DESCRIPTION DES FIGURES

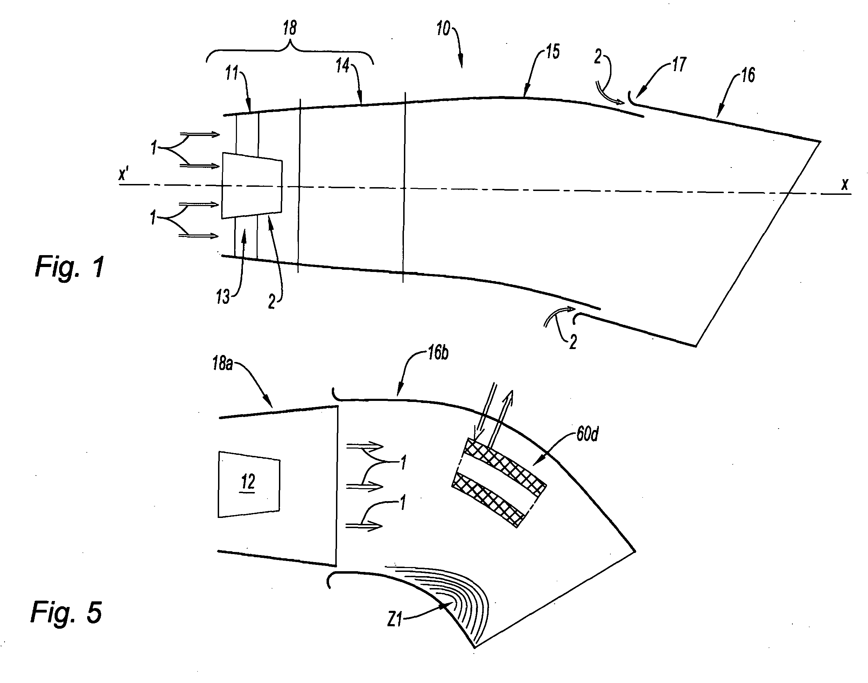

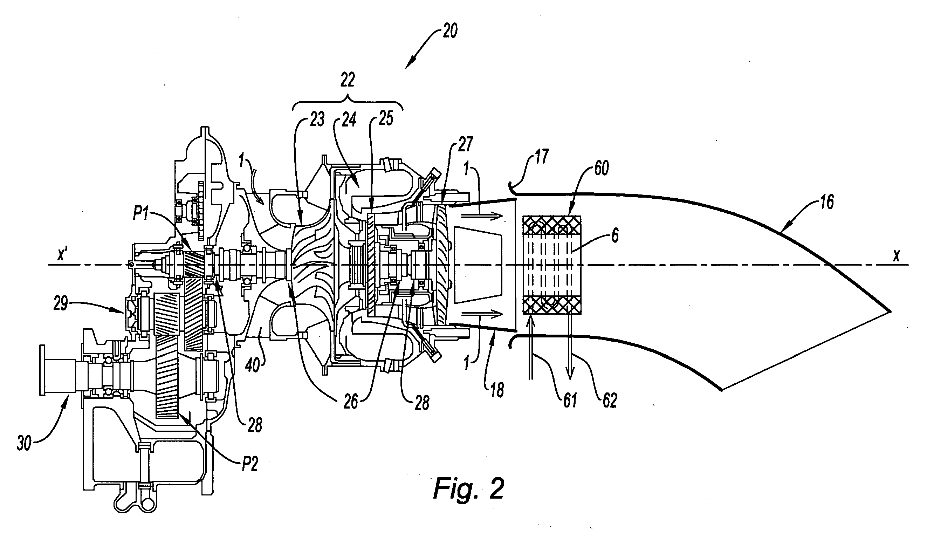

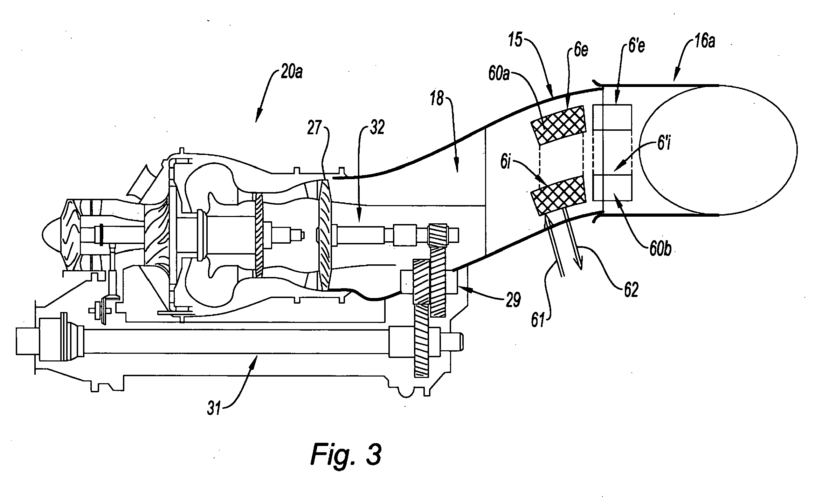

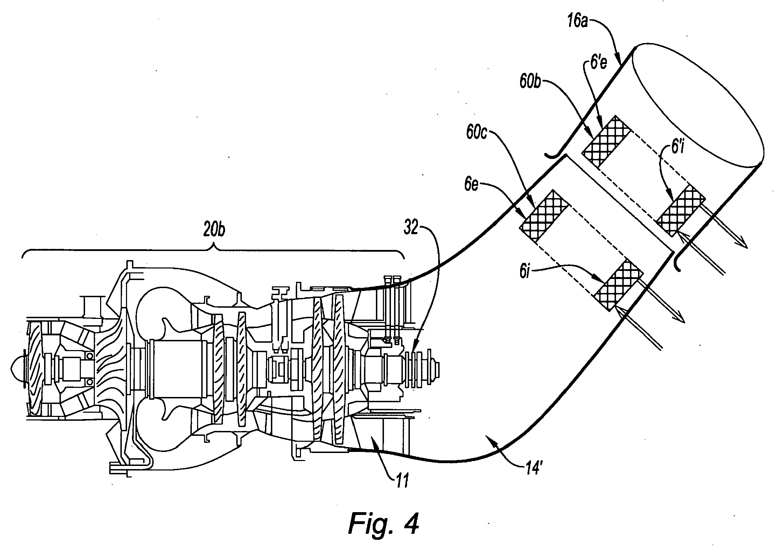

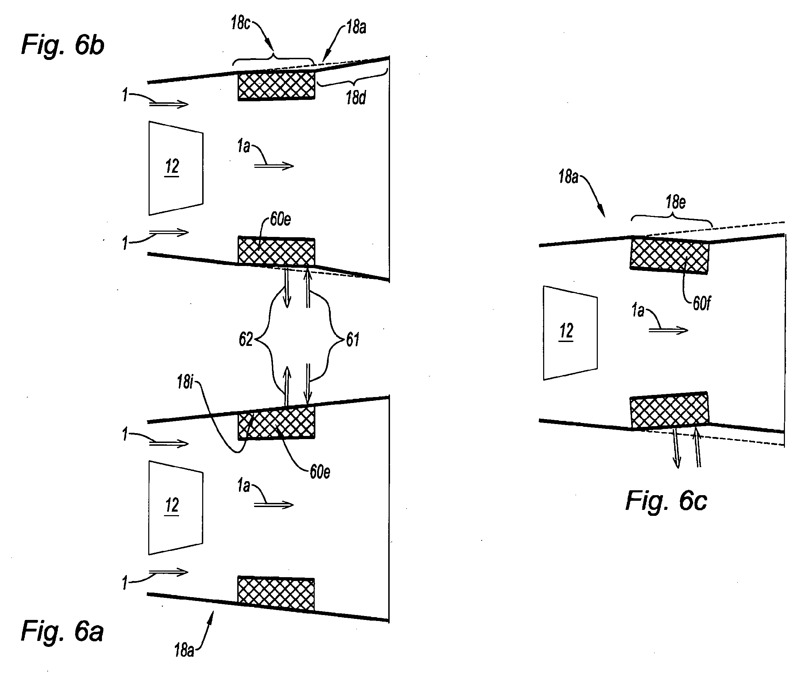

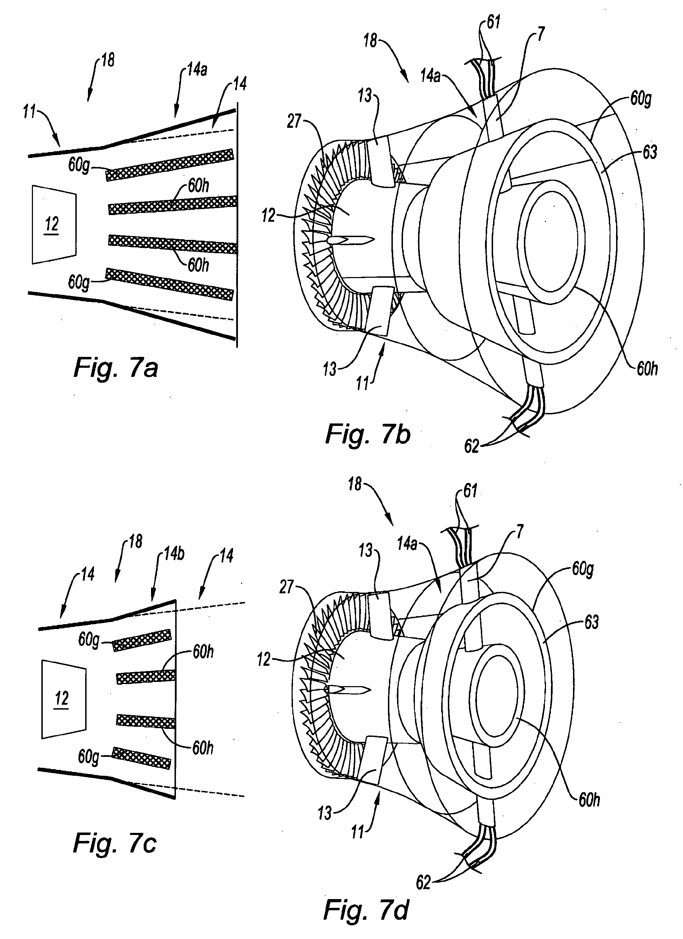

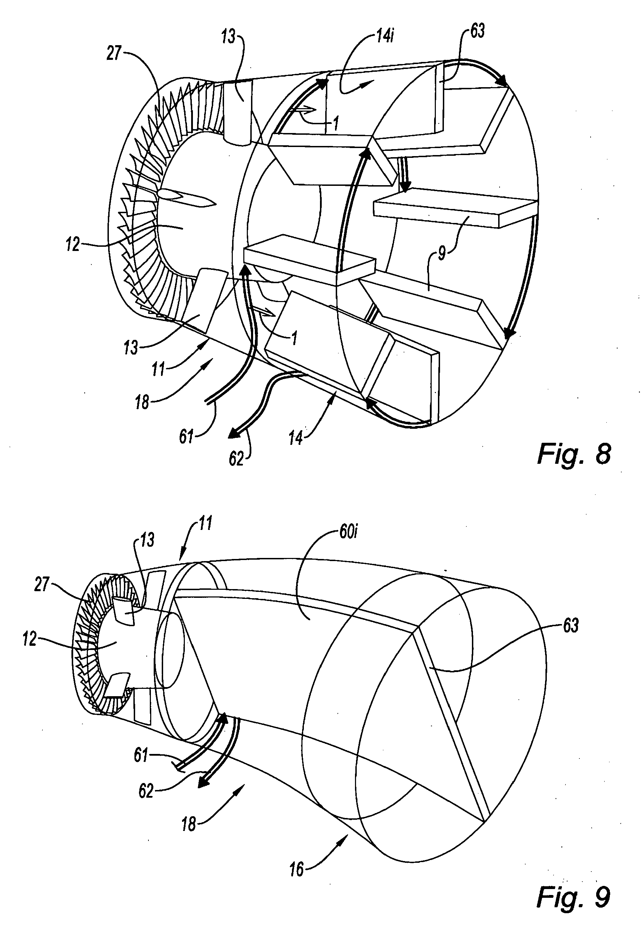

D'autres aspects, caractéristiques et avantages de l'invention apparaîtront dans la description qui suit, relative à des modes de réalisation particuliers non limitatifs, en référence aux dessins annexés qui représentent, respectivement :
- en figure 1, une vue en coupe schématisée des éléments constitutifs d'un ensemble échappement d'une turbomachine ;
- en figure 2, une vue en coupe schématisée d'une architecture à élément échangeur annulaire dans l'éjecteur d'une turbomachine à prise de puissance avant sur l'arbre de turbine traversant via un réducteur;
- en figure 3, une vue en coupe schématisée d'une architecture à élément échangeur de forme adaptée dans le prolongateur ou intégré en partie dans l'éjecteur d'une turbomachine à prise de puissance avant sur arbre de transmission extérieur en prise arrière sur l'arbre de turbine via un réducteur ;
- en figure 4, une vue en coupe schématisée d'une architecture à élément échangeur de forme adaptée dans la tuyère ou dans l'éjecteur d'une turbomachine à prise de puissance directe arrière ;
- en figure 5, une vue en coupe schématisée d'un échappement avec un positionnement optimisé d'un élément échangeur dans un éjecteur courbe ;
- en figures 6a à 6c, trois vues en coupe schématisée d'une architecture intégrant un élément échangeur dans un diffuseur/tuyère, avec une localisation de cet élément échangeur et une structure de l'élément d'échappement propres à augmenter la diffusion ;
- en figures 7a à 7d, deux vues en coupe schématisée et deux vues en perspective transparente respectives d'architectures intégrant un élément échangeur annulaire à double plaque dans un diffuseur/tuyère, avec soit une augmentation de l'angle de diffusion (figure 7a et 7c) soit un raccourcissement de tuyère (figure 7b et 7d);
- en figure 8, une vue transparente en perspective d'une architecture intégrant un élément échangeur à plaques radiales dans un diffuseur/tuyère de turbomachine, et
- en figure 9, une vue en perspective transparente d'une architecture de tuyère coudée intégrant un élément échangeur en plaque radiale intégrale, de courbure suivant la ligne principale de la tuyère.

### DESCRIPTION DETAILLEE DE MODES DE REALISATION

Dans la description qui suit, les termes amont et aval - respectivement avant et arrière - sont associés aux localisations relativement au sens du flux des gaz d'une turbomachine d'un axe principal X'X rectiligne. Par ailleurs, dans toutes les figures, les éléments identiques ou semblables, exerçant une même fonction, sont identifiés avec des signes de référence identiques ou proches.

En référence à la figure 1, la vue en coupe schématisée d'une veine d'échappement 10 d'une turbomachine se compose d'éléments qui se raccordent successivement d'amont en aval par rapport à l'axe X'X , à savoir : un diffuseur 11, comportant un cône de diffusion 12 de flux des gaz 1 - monté sur l'axe par des bras 13, radiaux dans l'exemple illustré -, une tuyère 14, un prolongateur 15 - en général globalement déviateur du flux des gaz 1 - et un éjecteur des gaz 16 avec un raccordement annulaire 17 ouvert pour aspirer l'air 2. Le diffuseur 11 et la tuyère 14 peuvent former un seul élément diffuseur/tuyère 18.

Les éléments échangeurs des architectures d'échappement selon l'invention peuvent être implantés dans tout type de turbomachines, en particulier dans les turbomachines à prise de puissance avant sur arbre de transmission traversant, à prise de puissance avant sur arbre de transmission extérieur en prise arrière, et à prise de puissance directe sur arbre de turbine arrière. Les figures 2 à 4 illustrent des implantations optimisées d'éléments échangeurs dans les veines d'échappement de ces types de turbomachine.

En référence à la figure 2, la turbomachine est un turbomoteur 20 composé classiquement d'un générateur de gaz 22 - constitué par le compresseur 23 centrifuge dans cet exemple, la chambre de combustion des gaz 24 et la turbine haute pression 25 d'entraînement du compresseur 23 via l'arbre haute pression 26 - et d'une turbine libre 27. Le générateur de gaz 22 est de révolution autour de l'axe X'X. La turbine libre 27 entraîne, via l'arbre traversant de transmission 28 et le réducteur 29, l'arbre de puissance 30 disponible pour les charges (rotor d'hélice, accessoires). Les arbres traversant 28 et de puissance 30 sont en prise sur le réducteur 29 via les pignons P1 et P2.

L'air 1 qui pénètre par les conduits d'arrivée 40 est comprimé par le compresseur 23, injecté dans la chambre de combustion 24 pour être mélangé avec le combustible et provoquer la combustion. Cette combustion fournit une énergie cinétique élevée aux gaz 1 en sortie de la chambre, et entraîne la turbine libre 27 en rotation. Les gaz 1 résiduels s'échappent par le diffuseur/tuyère 18, puis par l'éjecteur final 16 couplé au diffuseur/tuyère 18 via le raccordement ouvert 17.

Un échangeur en forme de plaque annulaire 60 est implanté, par tout moyen connu (entretoises, bras, etc.), dans la partie d'entrée amont axisymétrique de l'éjecteur 16. Ces moyens d'implantation sont repris dans tous les exemples d'architecture ci-dessous. L'échangeur est constitué d'un canal d'entrée 61 et d'un canal de sortie 62, reliés aux entrée et sortie d'un canal central 6 enroulé en hélice ou en sinusoïdes dans la plaque annulaire 60. Les canaux 61 et 62 sont reliés à leurs autres extrémités à des moyens de récupération et de recyclage mécanique ou électromécaniques de l'énergie pour améliorer le rendement global de la turbomachine. L'énergie est récupérée via un fluide froid qui circule dans l'élément échangeur et qui se réchauffe dans le canal central par transfert thermique de la chaleur provenant des gaz résiduels chauds 1 lors de leur éjection.

Un tel transfert est réalisé par la perméabilité ou porosité de la plaque 60 obtenue par la formation de trous 63 (représentés schématiquement sur les figures 7b, 7d, 8 et 9). Ces trous ont un diamètre constant ou variable et une densité adaptés à la localisation et à la structure des éléments échangeurs.

En référence à la vue en coupe schématique de la figure 3, l'architecture de turbomoteur 20a est à prise de puissance avant sur un arbre de puissance extérieur 31 en prise arrière sur l'arbre 32 de turbine 27 via le réducteur 29. La veine d'échappement de ce turbomoteur 20a est constituée d'un diffuseur/tuyère 18, d'un prolongateur 15 et d'un éjecteur axisymétrique 16a. L'élément échangeur est constitué d'une plaque 60a, implantée dans une portion non axisymétrique du prolongateur 15 et connectée aux canaux d'entrée et de sortie 61 et 62. La plaque 60a est quasi-annulaire et présente des faces externe 6e et interne 6i parallèles et de forme adaptée, avantageusement parallèle, à la face du prolongateur 15 en regard. Alternativement, une plaque 60b de l'élément échangeur peut être implantée en partie dans le prolongateur et en partie dans l'éjecteur, de préférence majoritairement dans l'éjecteur axisymétrique 16a. Dans ce cas, la plaque 60b est annulaire, avec des faces 6'e et 6'i de section circulaire.

Dans un turbomoteur 20b à prise directe de puissance l'arbre arrière 32, c'est-à-dire sans réducteur, tel qu'illustré sur la vue en coupe schématisée de la figure 4, l'architecture d'échappement comporte un diffuseur 11, une tuyère coudée non axisymétrique 14' et un éjecteur axisymétrique 16a. L'élément échangeur est constitué d'une plaque de forme quasi-annulaire 60c implantée dans la partie aval de la tuyère 14', avec des faces 6e et 6i parallèles à la forme de la tuyère 14'. Alternativement, une plaque 60b de forme annulaire peut être implantée dans l'éjecteur 16a, avec des faces 6'e et 6'i de section circulaire.

Dans toutes les implantations ci-dessus (figures 2 à 4), la plaque annulaire ou quasi annulaire de l'élément échangeur 60 ou 60a à 60c, est positionnée dans des zones proches des faces des éléments d'échappement. Dans ces conditions, cette plaque est bien alimentée par la traversée en nappes de gaz chauds issus du générateur de gaz, laissant une partie centrale et majoritaire de flux de gaz 1 non perturbé.

Dans le cas où un élément d'échappement présente une forme zone décollée ou à faible Mach (faible vitesse des gaz), l'élément échangeur peut présenter avantageusement une forme non annulaire. Ainsi, la vue en coupe schématisée de la figure 5 se rapporte à une veine d'échappement avec un éjecteur courbe 16b. Cet éjecteur est couplé au diffuseur/tuyère axisymétrique 18a et présente une zone décollée Z1 de grande courbure, contournée par le flux de gaz 1 du fait de son écoulement axial dans le diffuseur/tuyère 18a. L'élément échangeur est constitué d'une plaque tubulaire 60d implantée dans la courbure plus faible de l'éjecteur 16b, du côté opposé à la zone décollée Z1, de manière à recevoir une bonne alimentation en flux de gaz 1.

L'échangeur peut avantageusement présenter des structures permettant de contrôler et d'optimiser la diffusion du flux de gaz en améliorant les caractéristiques aérodynamiques de cette diffusion.

Les figures 6a à 6c illustrent trois vues en coupe schématisée d'une architecture intégrant un élément échangeur annulaire dans un diffuseur/tuyère permettant de baisser la pression statique en sortie de l'échangeur. En référence à la figure 6a, l'élément échangeur est constitué d'une plaque annulaire 60e, implantée dans le diffuseur/tuyère axisymétrique 18a de forme conique s'ouvrant vers l'aval, et des canaux 61 et 62 d'entrée/sortie. La plaque 60e est localisée contre la face intérieure 18i du diffuseur/tuyère. Alternativement (figure 6b), le diffuseur/tuyère 18a présente une portion quasi-cylindrique 18c ou légèrement ouverte vers l'aval, dans laquelle est implantée la plaque annulaire 60e. Le diffuseur/tuyère 18a (les portions non modifiées figurent en traits pointillés) présente ensuite une portion 18d plus ouverte pour rattraper le contour du diffuseur/tuyère 18a non modifié.

Dans ces deux premières variantes, la composante statique de la pression est diminuée en sortie de l'échangeur 60e par le biais d'une diffusion moindre du flux non obstrué 1 a. Le flux de gaz 1 présente alors une diffusion favorisée à travers la plaque 60e. Dans le cas illustré par la figure 6c, la portion de diffuseur/tuyère 18e d'implantation de la plaque d'échange annulaire 60f est de forme conique à convergence aval. Le flux de gaz non obstrué 1 a est alors accéléré par le rétrécissement opéré par la portion 18e du diffuseur/tuyère 18a. Cette accélération du flux non obstrué entraîne le flux d'alimentation de la plaque d'échange de chaleur 60f.

Afin d'améliorer les caractéristiques de diffusion, l'élément échangeur peut être composé de plaques annulaires coniques associées à une tuyère de même forme. Les figures 7a à 7d présentent des vues en coupe schématisée (figures 7a et 7c) et en perspective transparente (figures 7b et 7d) d'architectures intégrant un élément échangeur de ce type dit « intercalaire » à deux plaques annulaires concentriques 60g et 60h dans le diffuseur/tuyère 18. La partie tuyère 14a présente une conicité d'angle supérieur, par exemple 25°, par rapport à la partie diffuseur 11-12, par exemple 13°, qui correspond à la conicité de la tuyère 14 non modifiée (en traits pointillés). Les plaques annulaires concentriques 60g et 60h ont des conicités d'angle légèrement plus faibles, par exemple 21 et 15°.

Globalement, la tuyère 14a présente la même longueur que la tuyère non modifiée (figure 7a). La diffusion est sensiblement augmentée par cette opération, ce qui conduit à un coefficient de récupération statique supérieur et donc de meilleures performances du turbomoteur. Alternativement (figure 7c), la tuyère 14b est raccourcie par rapport à la tuyère non modifiée 14, de sorte que la diffusion retrouve son niveau initial. Dans ces conditions, à même diffusion, le raccourcissement de la tuyère permet un gain en masse et en encombrement.

Les figures 7c et 7d illustrent une vue en perspective transparente de cette architecture intégrant l'élément échangeur annulaire à deux plaques annulaires concentriques 60g et 60h, respectivement à diffusion augmentée et à tuyère raccourcie 14b. Ces plaques sont implantées dans les tuyères 14a et 14b, à l'aide d'un bras radial cylindrique 7. Ce bras peut contenir les canaux d'entrée 61 et de sortie 62 des plaques 60g et 60h. Sur les figures 7b et 7d (ainsi que sur les figures 8 et 9 suivantes), apparaissent également la partie diffuseur 11 qui contient le cône de diffusion 12 - maintenu par les bras radiaux 13 - ainsi que la turbine libre 27 à travers laquelle les gaz chauds résiduels se détendent et les trous de passage d'air 63 visibles sur la section aval des plaques.

L'élément échangeur peut également se composer d'une multitude de plaques radiales pour former un échangeur de type redresseur de flux de gaz. La figure 8 illustre ainsi une vue transparente en perspective d'une architecture d'échappement intégrant, dans la partie tuyère 14 du diffuseur/tuyère 18, huit plaques planes radiales 9 implantées sur la face interne 14i de la tuyère par tout moyen de fixation connu (soudage, vissage, rivetage, attaches via des pattes, des bras, des entretoises, ...). Les plaques radiales 9, permettent d'augmenter le coefficient de récupération de pression de la tuyère 14 par redressement du flux de gaz 1 en sortie de turbine.

Les canaux d'entrée 61 et de sortie 62 sont connectés en série d'une plaque à l'autre et reliés aux moyens de récupération d'énergie. Alternativement, les plaques peuvent être alimentées en parallèle par des canaux d'entrée/sortie individuels et des modules communs d'alimentation et de récupération. Sur cette figure apparaissent d'autres éléments : partie diffuseur 11 avec cône de diffusion 12, bras radiaux 13, turbine libre 27 déjà commentés ci-dessus.

Un élément échangeur à structure de séparateur de flux est illustré sur la vue en perspective en transparence de l'architecture d'échappement à tuyère courbe de la figure 9. La structure est en forme de plaque radiale intégrale 60i dont la courbure suit la courbure moyenne de la tuyère 18 et de l'éjecteur 16. Sur cette figure apparaissent également des éléments déjà présentés (canaux d'entrée/sortie 61 et 62, diffuseur 11 et cône de diffusion 12, bras radiaux 13, turbine libre 27). Que la tuyère soit droite ou courbe (comme sur la figure 9), une telle structure de plaque séparatrice participe aux caractéristiques de diffusion : elle permet, comme les plaques intercalaires, soit d'augmenter la diffusion du flux à iso-stabilité et iso-longueur d'échappement, soit de raccourcir l'échappement à iso-diffusion. Elle permet également d'augmenter le coefficient de récupération de pression de la tuyère 18 par redressement du flux de gaz 1 en sortie de turbine.

Dans les cas de tuyères courbes assurant une fonction de déviation de jet (cf. figure 9), une telle structure de plaque séparatrice participe également à la déviation en assurant un meilleur guidage du jet.

La présente invention n'est pas limitée aux exemples décrits et représentés. Il est par exemple possible de prévoir des plaques d'échange thermique de structure en croix ou en étoile pour constituer des séparateurs. Par ailleurs, la veine d'échappement peut se limiter à une tuyère ou se composer de tout ou partie des éléments d'échappement additionnels présentés : diffuseur, prolongateur, déviateur et/ou éjecteur. De plus, chaque élément échangeur peut intégrer un ou plusieurs canaux de circulation de fluide froid indépendants, de pressions pouvant être différentes en cas de circuits multiples.

## Revendications

1. Architecture de turbomachine à échangeur de chaleur intégré dans une veine d'échappement (10) de flux des gaz chauds (1) de la turbomachine, **caractérisée en ce qu'**elle comprend des éléments échangeurs de chaleur (60, 60a à 60i ; 9) implantés dans l'un des éléments (11, 14, 14a, 14b, 15, 16, 16a, 16b, 18, 18a, 18c) constituant la veine d'échappement (10), ces éléments étant de structure apte à canaliser le flux des gaz chauds (1) et à réaliser une obstruction partielle de ce flux de gaz, dans un environnement globalement diffusif de ces gaz, lors d'une traversée d'une partie du flux dans ces éléments échangeurs, et des moyens de récupération et de recyclage mécaniques ou électromécaniques de l'énergie thermique résiduelle des gaz d'échappement (1) reliés aux éléments échangeurs de chaleur (60, 60a à 60i; 9) pour augmenter la puissance disponible sur arbre (30, 31) de la turbomachine (20, 20a, 20b) sans sensiblement perturber le flux des gaz (1, 1a).

2. Architecture à échangeur intégré selon la revendication 1, dans laquelle les éléments échangeurs (60g, 60h, 60e, 60f) sont de structure évolutive de manière continue en section.

3. Architecture à échangeur intégré selon la revendication 1 ou 2, dans laquelle les éléments échangeurs (60, 60a à 60i ; 9) présentent en section une structure localisée limitée par rapport à la veine d'échappement (10) dans laquelle ils sont implantés, et la partie de flux (1) traversant ces éléments échangeurs est minoritaire si bien que les éléments échangeurs présentent une obstruction minoritaire du flux des gaz d'échappement (1, 1a).

4. Architecture à échangeur intégré selon la revendication 1, dans laquelle l'élément échangeur (60i) présente en section une structure sensiblement intégrale par rapport à la veine d'échappement (10) avec une porosité ou perméabilité suffisamment élevée pour que l'obstruction du flux des gaz d'échappement reste partielle.

5. Architecture à échangeur intégré selon l'une quelconque des revendications précédentes, dans laquelle les éléments d'échappement dans lesquels sont implantés les éléments échangeurs (60, 60a à 60i ; 9) sont choisis, dans l'ordre d'amont en aval, parmi un diffuseur (11) à cône central (12) tenu par des bras structuraux (13), une tuyère d'échappement (14, 14a, 14b), un prolongateur/déviateur (15) et un éjecteur final (16, 16a, 16b).

6. Architecture à échangeur intégré selon la revendication 1, dans laquelle la structure des éléments échangeurs est choisie parmi une structure intercalaire annulaire (60g, 60h), une structure de redresseur / déflecteur de canalisation du flux à plaques radiales (9), une structure de séparateur de flux (60i), en particulier radiale, avec une porosité variable en entrée du flux de gaz chaud (1).

7. Architecture à échangeur intégré selon la revendication précédente, dans laquelle une forme intercalaire ou séparatrice (60i) est apte soit à augmenter la diffusion du flux à iso-stabilité et iso-longueur d'échappement (14a), soit de raccourcir l'échappement à iso-diffusion (14b).

8. Architecture à échangeur intégré selon l'une quelconque des revendications précédentes, dans laquelle chaque élément échangeur (60, 60a à 60i ; 9) intègre un ou plusieurs canaux de fluide froid indépendants.

9. Architecture à échangeur intégré selon l'une quelconque des revendications précédentes, dans laquelle soit les éléments échangeurs (9 ; 60e, 60f) peuvent être positionnés dans la veine d'échappement (10) en épousant la forme de l'élément dans lequel ils sont implantés, soit les éléments échangeurs (restent en retrait (60, 60a à 60d, 60g à 60i ; 9).

10. Architecture à échangeur intégré selon l'une quelconque des revendications précédentes, dans laquelle les éléments échangeurs (60, 60a à 60i ; 9) sont de structure et d'implantation aptes à constituer des surfaces d'isolation et un matériau absorbant au niveau acoustique, de sorte à diminuer sensiblement la trainée et le bruit aérodynamique.

## Patentansprüche

1. Aufbau einer Turbomaschine mit Wärmeaustauscher, der in einen Abgasstrom (10) heißer Gase (1) der Turbomaschine eingebaut ist, **dadurch gekennzeichnet, dass** er Wärmeaustauschelemente (60, 60a bis 60i; 9) umfasst, die in eines der Elemente (11, 14, 14a, 14b, 15, 16, 16a, 16b, 18, 18a, 18c), die den Abgasstrom (10) bilden, implantiert sind, wobei diese Aufbauelemente geeignet sind, den Strom heißer Gase (1) zu kanalisieren und eine teilweise Blockierung dieses Gasstroms in einer Umgebung, die insgesamt für diese Gase diffusiv ist, bei einem Durchqueren eines Teils des Stroms in diesen Austauschelementen auszuführen, und Mittel zum Rückgewinnen und mechanischen oder elektromechanischen Recycling der Restwärmeenergie der Abgase (1), die mit den Wärmeaustauschelementen (60, 60a bis 60i; 9) verbunden sind, um die auf der Welle (30, 31) der Turbomaschine (20, 20a, 20b) vorhandene Leistung zu erhöhen, ohne den Strom der Gase (1, 1a) im Wesentlichen zu stören.

2. Aufbau mit integriertem Austauscher nach Anspruch 1, wobei die Austauschelemente (60g, 60h, 60e, 60f) eine im Querschnitt allmählich verlaufende Struktur haben.

3. Aufbau mit integriertem Austauscher nach Anspruch 1 oder 2, wobei die Austauschelemente (60, 60a bis 60i; 9) im Querschnitt eine lokalisierte Struktur aufweisen, die in Bezug auf den Abgasstrom (10), in dem sie implantiert sind, begrenzt ist, und wobei der Teil des Stroms (1), der diese Austauschelemente durchquert, minoritär ist, so dass die Austauschelemente eine minoritäre Blockierung des Stroms der Abgase (1, 1a) aufweisen.

4. Aufbau mit integriertem Austauscher nach Anspruch 1, wobei das Austauschelement (60i) im Querschnitt eine im Wesentlichen integrale Struktur in Bezug auf den Abgasstrom (10) mit einer Porosität oder Durchlässigkeit aufweist, die ausreichend hoch ist, damit das Blockieren des Stroms der Abgase teilweise bleibt.

5. Aufbau mit integriertem Austauscher nach einem der vorhergehenden Ansprüche, wobei die Auspuffelemente, in die die Austauschelemente (60, 60a bis 60i; 9) implantiert sind, in der Reihenfolge von stromaufwärts nach stromabwärts aus einem Diffusor (11) mit zentralem Kegel (12), der von Strukturarmen (13) gehalten wird, einem Abgasrohr (14, 14a, 14b) einem Verlängerer/Umlenker (15) und einem abschließenden Ejektor (16, 16a, 16b) ausgewählt sind.

6. Aufbau mit integriertem Austauscher nach Anspruch 1, wobei die Struktur der Austauschelemente aus einer eingefügten ringförmigen Struktur (60g, 60h) einer Kanalisationsaufrichter/-ablenkerstruktur des Stroms mit radialen Platten (9), einer Stromtrennerstruktur (60i), die insbesondere radial ist, mit einer variablen Porosität am Eingang des Stroms heißer Gase (1) ausgewählt ist.

7. Aufbau mit integriertem Austauscher nach dem vorhergehenden Anspruch, wobei eine einfügende oder trennende Form (60i) geeignet ist, um entweder die Diffusion des Stroms mit Isostabilität und Auspuffisolänge (14a) zu erhöhen oder den Auspuff mit Isodiffusion (14b) zu verkürzen.

8. Aufbau mit integriertem Austauscher nach einem der vorhergehenden Ansprüche, wobei jedes Austauschelement (60, 60a bis 60i; 9) einen oder mehrere unabhängige Kanäle mit kaltem Fluid integriert.

9. Aufbau mit integriertem Austauscher nach einem der vorhergehenden Ansprüche, wobei die Austauschelemente (9; 60e, 60f) entweder in dem Abgasstrom (10) positioniert werden können, indem sie sich an die Form des Elements, in dem sie implantiert sind, schmiegen, oder im Rücksprung bleiben (60, 60a bis 60d, 60g bis 60i; 9).

10. Aufbau mit integriertem Austauscher nach einem der vorhergehenden Ansprüche, wobei die Austauschelemente (60, 60a bis 60i; 9) eine Struktur und eine Lage haben, die geeignet sind, um Isolationsoberflächen und einen akustisch absorbierenden Werkstoff derart zu bilden, dass der Luftwiderstand und aerodynamisches Geräusch wesentlich verringert sind.

## Claims

1. Architecture of a turbine engine with heat exchanger built into an exhaust line (10) for the stream of the hot gases (1) of the turbine engine, **characterized in that** it comprises heat-exchange elements (60, 60a to 60i; 9) installed in one of the units (11, 14, 14a, 14b, 15, 16, 16a, 16b, 18, 18a, 18c) constituting the exhaust line (10), said elements having a structure which is capable of channeling the stream of the hot gases (1) and achieving a partial obstruction of this gas stream, in an environment that globally diffuses these gases, while a part of the stream flows across these heat-exchange elements, and mechanical or electromechanical means of recovery and recycling of the residual thermal energy of the exhaust gases (1) connected to the heat-exchange elements (60, 60a to 60i; 9) in order to increase the power available at the shaft (30, 31) of the turbine engine (20, 20a, 20b) without substantially disturbing the stream of the gases (1, 1 a).

2. Architecture with built-in heat exchanger according to claim 1, in which the heat-exchange elements (60g, 60h, 60e, 60f) have a structure the section of which evolves in a continuous way.

3. Architecture with built-in heat exchanger according to claim 1 or 2, in which the heat-exchange elements (60, 60a to 60i; 9) have, in cross-section, a localized structure, which is limited with regard to the exhaust line (10) in which they are installed, and the part of the stream (1) flowing across these heat-exchange elements is a minority, so that the heat-exchange elements produce a minority obstruction of the stream of the exhaust gases (1, 1a).

4. Architecture with built-in heat exchanger according to claim 1, in which the heat-exchange element (60i) has, in cross-section, a substantially complete structure, with regard to the exhaust line (10), with a sufficiently high porosity or permeability so that obstruction of the stream of the exhaust gases remains partial.

5. Architecture with built-in heat exchanger according to any of the preceding claims, in which the exhaust units, in which the heat-exchange elements (60, 60a to 60i; 9) are installed, are chosen, in upstream-to-downstream order, among a diffuser (11) with a central cone (12) supported by structural arms (13), an exhaust nozzle (14, 14a, 14b), an extension piece/deflector (15) and an end ejector (16, 16a, 16b).

6. Architecture with built-in heat exchanger according to claim 1, in which the structure of the heat-exchange elements is chosen among an annular intermediate structure (60g, 60h), a structure of a vane assembly/deflector for channeling the stream with radial plates (9), a structure of a stream splitter (60i), in particular radial, with a variable porosity at the inlet of the hot gas stream (1).

7. Architecture with built-in heat exchanger according to the preceding claim, in which an intermediate or splitting shape (60i) makes it possible either to increase the diffusion of the stream while keeping exhaust isostability and isolength (14a) or to shorten the exhaust while keeping isodiffusion (14b).

8. Architecture with built-in heat exchanger according to any of the preceding claims, in which each heat-exchange element (60, 60a to 60i; 9) includes one or several independent channels for cold fluid.

9. Architecture with built-in heat exchanger according to any of the preceding claims, in which either the heat-exchange elements (9; 60e, 60f) can be positioned into the exhaust line (10) and mould the shape of the unit in which they are installed or the heat-exchange elements stand off (60, 60a to 60d, 60g to 60i; 9).

10. Architecture with built-in heat exchanger according to any of the preceding claims, in which the heat-exchange elements (60, 60a to 60i; 9), owing to their structure and arrangement, are capable of constituting insulating surfaces and a sound-absorbing material so that drag and aerodynamic noise are substantially reduced.
